# EUROPEAN PATENT SPECIFICATION

(11) **EP 3 261 103 B1**
(45) Date of publication and mention of the grant of the patent: **17.03.2021**
(21) Application number: 15882570.3
(22) Date of filing: 18.02.2015
(51) Int. Cl.: H01F 7/16, H01F 7/08, H01F 7/121, F16K 31/06, H01H 50/20

(54) **ELECTROMAGNETIC SOLENOID**
ELEKTROMAGNETISCHES SOLENOID
SOLÉNOÏDE ÉLECTROMAGNÉTIQUE

(43) Date of publication of application: 27.12.2017
(73) Proprietor: Mikuni Corporation, Tokyo 101-0021 (JP)
(72) Inventor: SHINOHE, Shun, Takizawa-shi Iwate 020-0698 (JP); KOIWA, Hiroshi, Takizawa-shi Iwate 020-0698 (JP)
(74) Representative: Becker & Kurig Partnerschaft Patentanwälte PartmbB
(86) International application number: PCT/JP2015/054360
(87) International publication number: WO 2016/132467

(56) References cited:
- EP-A2- 2 296 155
- WO-A1-2014/024659
- WO-A1-2014/024659
- JP-A- H0 221 083
- JP-A- H0 650 459
- JP-A- H0 650 459
- JP-A- H09 248 370
- JP-A- 2011 169 404
- JP-A- 2011 169 404
- JP-A- 2015 001 296
- JP-U- S61 572
- JP-U- S61 572

## Description

### [Technical Field]

The present invention relates to an electromagnetic solenoid in which a plunger is moved by excitation of an exciting coil.

### [Background Art]

In general, in an electromagnetic solenoid, when a plunger protrudes due to excitation of an exciting coil and the exciting coil is demagnetized, the plunger is pushed to its original position thereof by a biasing member such as a spring or the like, or an external load.

In order for the plunger to be pushed and stop at its original position, a fixing member (a stopper) is fixed at a predetermined position, and the pushed plunger collides with the fixing member and stops at its original position.

In general, the plunger and the fixing member are formed of a metal, and for this reason, when the plunger collides with the fixing member, a metallic sound is generated.

Therefore, a technology is disclosed, which is for absorbing a shock due to the collision and reducing collision noise by installing a shock absorbing member formed of an elastomer at a portion with which the plunger or the fixing member collides and interposing the shock absorbing member therebetween upon collision between the plunger and the fixing member (for example, see Patent Literature 1).

In the electromagnetic solenoid disclosed in Patent Literature 1, the shock absorbing member formed of an elastomer is installed at both of collision portions of the plunger and the fixing member (the stopper) facing each other, and the shock due to the collision is absorbed by the shock absorbing member to decrease the collision noise. In addition, in the electromagnetic solenoid, the shock absorbing member absorbs the shock by receiving the pushed plunger while being elastically deformed, and after the elastic deformation, the shock absorbing member is elastically restored to return the plunger to a predetermined original position.

However, in the electromagnetic solenoid disclosed in Patent Literature 1, when the shock absorbing member becomes fatigued and slightly deformed due to qualitative change due to aging as the plunger repeatedly collides with the shock absorbing member over time, the plunger cannot be precisely stopped at the predetermined position.

In addition, when the plunger cannot be stopped at the predetermined position, a stroke amount of the plunger is varied and operated members cannot be accurately operated.

Here, as an example of the electromagnetic solenoid capable of reducing collision noise generated due to collision of the plunger and accurately stopping the plunger at the predetermined position always, electromagnetic solenoids disclosed in Patent Literature 2 and Patent Literature 3 are known.

In the electromagnetic solenoids disclosed in Patent Literatures 2 and 3, the electromagnetic solenoid disclosed in Patent Literature 3 will be described with reference to Fig. 6.

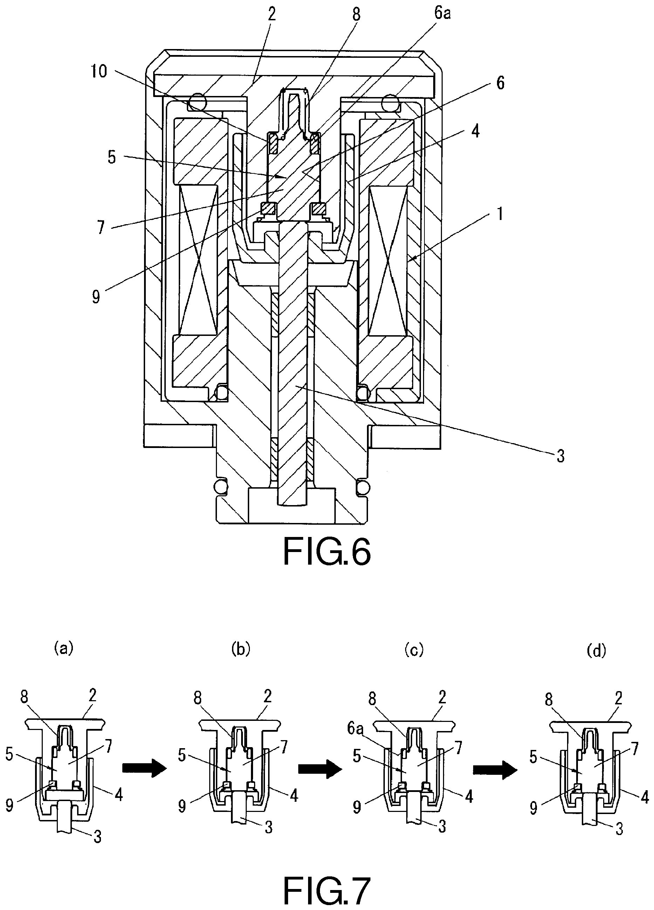

As shown in Fig. 6, a fixing portion 2 is installed inside a cylindrical coil portion 1 in a fixed state, and a movable yoke 4 to which a rod-shaped plunger 3 extending in the axial direction of the coil portion 1 is attached is installed movably in the axial direction of the coil portion 1.

Then, the movable yoke 4 advances (advances downward in Fig. 6) to be separated from the fixing portion 2 together with the plunger 3 due to excitation of the coil portion 1, and the movable yoke 4 retreats (retreats upward in Fig. 6) due to demagnetization of the coil portion 1 to approach the fixing portion 2 together with the plunger 3 under a biasing force of a return spring (not shown).

The fixing portion 2 has a shock absorbing means 5 configured to absorb a shock when the plunger 3 retreats together with the movable yoke 4 and collides with the fixing portion 2.

The shock absorbing means 5 includes a bearing member 7 movably installed in an accommodating portion 6 formed in the fixing portion 2 in an axial direction and configured to receive collision of the retreated plunger 3 and retreat together with the plunger 3, a biasing member 8 constituted by a spring installed on the accommodating portion 6 and configured to bias the bearing member 7 in an advance direction, and a restriction portion 9 configured to restrict the bearing member 7 as it advances at a predetermined position.

In addition, a cushioning material 10 is installed between the bearing member 7 and facing surfaces 6a formed in the accommodating portion 6 and facing each other in a direction in which the bearing member 7 retreats.

In the electromagnetic solenoid of the related art, as shown in Fig. 7(a) to Fig. 7(d), when the coil portion 1 is demagnetized, the plunger 3 is pressed by an external load, and when the plunger 3 retreats to approach the fixing portion 2 together with the movable yoke 4 and collides with the bearing member 7, the plunger 3 retreats together with the bearing member 7 against a biasing force of a spring 8 to absorb the shock and decrease the collision noise.

Further, since the cushioning material 10 is attached to the bearing member 7, i.e., since the cushioning material 10 is installed between the bearing member 7 and the facing surfaces 6a, the bearing member 7 does not collide with the facing surfaces 6a as it retreats, and the collision noise is reduced by the cushioning material 10. Accordingly, the collision noise generated due to collision of the plunger 3 can be reduced.

In addition, although the bearing member 7, which has retreated once, advances together with the plunger 3 under the biasing force of the spring 8, since the advance is restricted by the restriction portion 9, the plunger 3 can return to the predetermined position and can be positioned and stopped at the predetermined position with high precision, and thus a stroke amount of the plunger 3 can be constantly maintained. Patent documents JP S61 572U, JP H06 50459 A, EP 2 296 155 A2 disclose a solenoid according to the preamble of claim 1. WO 2014/024659 A1 discloses a solenoid comprising a buffer material.

### [Citation List]

### [Patent Literature]

[Patent Literature 1]
   Published Japanese Translation No. 2004-510327 of the PCT International Publication
[Patent Literature 2]
Japanese Unexamined Patent Application, Publication No. 2012-156284
[Patent Literature 3]
   Japanese Unexamined Patent Application, Publication No. 2014-36180

### [Summary of Invention]

### [Technical Problem]

Incidentally, in the electromagnetic solenoid of the related art, since the shock absorbing means is installed in the fixing portion disposed at a rear end portion thereof, a structure in the fixing portion is complicated. For this reason, a size of the electromagnetic solenoid may be increased when a shape of the movable yoke differs.

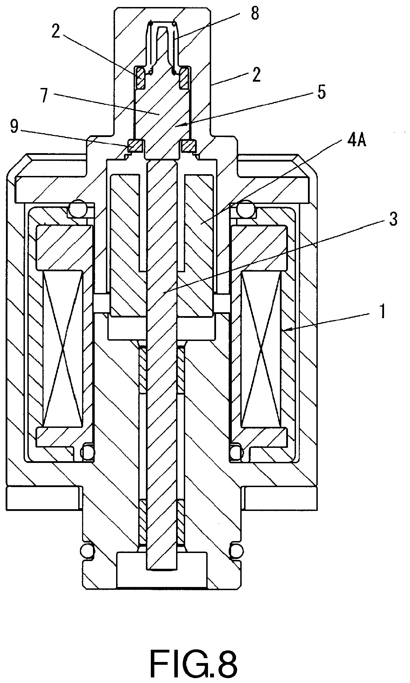

For example, as shown in Fig. 8, when the movable yoke 4A is formed in a shape that is inserted into the fixing portion 2, since the fixing portion 2 must protrude rearward (upward in Fig. 8) further than that shown in Fig. 6 in order to install the shock absorbing means 5, a vertical size of the electromagnetic solenoid may be increased. Further, in Fig. 8, components that are the same as those of the electromagnetic solenoid shown in Fig. 6 are designated by the same reference numerals.

In addition, in the electromagnetic solenoid of the related art, since the shock absorbing means is installed on the fixing portion disposed at a rear end portion thereof, if a weight of a rear side of the electromagnetic solenoid is increased and a gravity central position thereof moves toward a rear side, the influence of vibration (resonance) is a concern.

Further, in the electromagnetic solenoid of the related art, only a cup-shaped movable yoke that can be fitted onto the fixing portion can be applied in order to suppress the vertical size, and for example, when another shape of a movable yoke that can be inserted into the fixing portion is considered, versatility is low.

In addition, since the restriction portion configured to restrict advance of the bearing member at a predetermined position is fixed to the fixing portion as a separate part by caulking, the number of parts or fixing tasks increases.

In consideration of the above-mentioned circumstances, the present invention is directed to provide an electromagnetic solenoid having good versatility and capable of reducing resonance and further decreasing the number of parts, fixing tasks, or the like, while achieving reduction in size.

### [Solution to Problem]

In order to accomplish the above-mentioned objects, an electromagnetic solenoid according to claim 1 is provided; dependent claims concern preferred embodiments.

In the present invention, when the plunger retreats to approach the fixing portion together with the movable yoke and the protruding portion collides with the fixing portion, as the movable yoke temporarily retreats against a biasing force of the biasing member, a shock is absorbed and collision noise when the protruding portion collides with the fixing portion is reduced.

Then, while the movable yoke that has retreated once advances together with the plunger by the biasing member to return to the predetermined position, since the bearing surface of the movable yoke abuts the bearing member and the advance of the movable yoke is restricted, the plunger can return and be positioned to stop at the predetermined position with high accuracy, and thus a stroke amount of the plunger can be constantly maintained.

In addition, since the shock absorbing means is installed in the accommodating portion inside of the movable yoke to be relatively movable with respect to the movable yoke in the axial direction and has the bearing member having the protruding portion protruding from the rear end portion of the movable yoke and the biasing member installed between the bearing member and the plunger and configured to bias the bearing member against the bearing surface formed in the accommodating portion, the shock absorbing means can be installed on the movable yoke unlike in the related art, and there is no need for it to be installed on the fixing portion. Accordingly, versatility is good and reduction in size is achieved.

In addition, since the shock absorbing means is installed on the movable yoke disposed in front of the fixing portion other than the fixing portion unlike in the related art and a gravity central position of the electromagnetic solenoid moves forward further than in the related art, vibration (resonance) can be reduced.

Further, since the bearing surface configured to restrict movement of the bearing member biased by the biasing member is formed in the accommodating portion of the movable yoke, there is no need to fix the restriction portion as a separate part to the fixing portion by caulking as in the related art. Accordingly, the number of parts or fixing tasks is not increased, which achieves reduction in cost.

According to the present invention, a cushioning material is installed between the bearing member and the plunger.

According to the above-mentioned configuration, the plunger that has retreated together with the movable yoke does not collide with the bearing member, and collision noise is reduced by the cushioning material. Accordingly, collision noise generated due to collision of the plunger can be reduced.

According to an embodiment of the invention, a gap may be formed between the cushioning material and an inner wall surface of the accommodating portion in a moving direction of the movable yoke.

According to the above-mentioned configuration, since the cushioning material is attached to the bearing member, the cushioning material can be easily incorporated by accommodating the bearing member in the accommodating portion of the movable yoke.

In addition, since the gap is formed between the cushioning material and the inner wall surface of the accommodating portion in the moving direction of the movable yoke, even when the movable yoke moves together with the plunger, the cushioning material does not interfere with the inner wall surface of the accommodating portion. Accordingly, movement of the movable yoke is smooth and the cushioning material is not damaged due to friction with the inner wall surface.

According to an embodiment of the invention, the cushioning material may be disposed inside the spring and is not coming in contact with the spring.

According to the above-mentioned configuration, since the cushioning material is disposed inside the biasing member not to come in contact with the biasing member, the cushioning material and the biasing member do not interfere with each other. Accordingly, there is no influence from the cushioning material received by the biasing member, and movement of the movable yoke becomes smooth.

### [Advantageous Effects of Invention]

According to the present invention, the shock absorbing means can be installed on the movable yoke unlike in the related art, and there is no need to install the fixing portion. Accordingly, versatility becomes good and reduction in size is achieved.

In addition, in comparison with the related art, since the gravity central position of the electromagnetic solenoid moves forward, vibration (resonance) can be reduced.

Further, since the bearing surface configured to restrict movement of the bearing member is formed in the accommodating portion of the movable yoke and there is no need to fix the restriction portion to the fixing portion as a separated part as in the related art by caulking, the number of parts or fixing tasks is not increased and reduction in cost is achieved.

### [Brief Description of Drawings]

Fig. 1 is a cross-sectional view showing an electromagnetic solenoid according to a first embodiment of the present invention.
Fig. 2 is an enlarged cross-sectional view of a movable yoke of the electromagnetic solenoid.
Fig. 3 is a process view for describing an operation of the electromagnetic solenoid according to the first embodiment.
Fig. 4 is a cross-sectional view showing an electromagnetic solenoid according to a second embodiment of the present invention.
Fig. 5 is a cross-sectional view showing an electromagnetic solenoid according to a third embodiment of the present invention.
Fig. 6 is a cross-sectional view showing an example of an electromagnetic solenoid of the related art.
Fig. 7 is a process view for describing an operation of the electromagnetic solenoid of the related art.
Fig. 8 is a cross-sectional view showing another example of the electromagnetic solenoid of the related art.

### [Description of Embodiments]

Hereinafter, embodiments of the present invention will be described with reference to the accompanying drawings.

### (First embodiment)

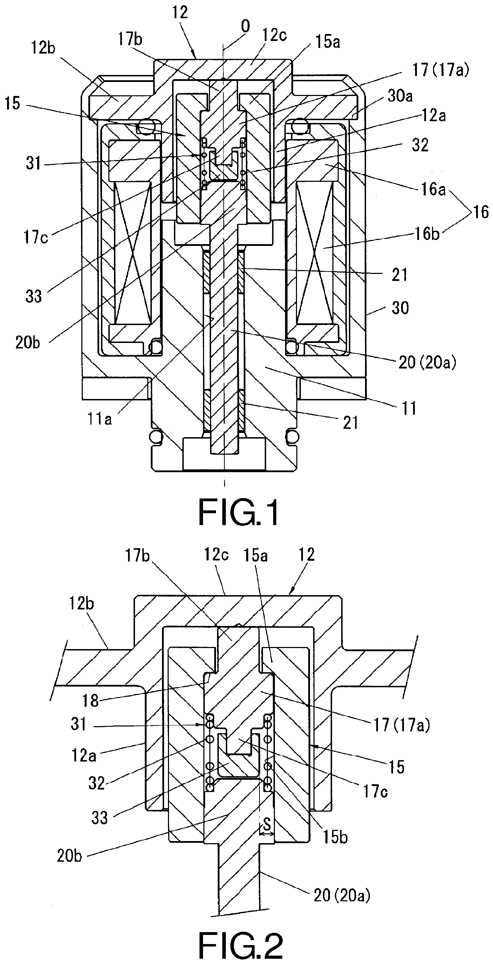

Fig. 1 is a cross-sectional view showing an electromagnetic solenoid according to a first embodiment of the present invention, and Fig. 2 is an enlarged cross-sectional view of a movable yoke of the electromagnetic solenoid.

The electromagnetic solenoid is used in, for example, exchange of an engine cam mechanism, used to operate a fuel lever of a diesel internal combustion engine in a stopping direction to automatically stop an engine, or used to automatically perform a reverse select lock in a four-wheeled manual transmission vehicle.

The electromagnetic solenoid includes a plunger guide portion 11 and a fixing portion 12, which function as a yoke, a movable yoke 15, and a coil portion 16.

The plunger guide portion 11 and the fixing portion 12 are disposed to face each other in an axis O direction, and the movable yoke 15 having a tubular shape is movably installed inside the fixing portion 12 in an axial direction thereof (the axis O direction). In addition, the coil portion 16 having a cylindrical shape is formed outside an outer circumference of the fixing portion 12 and outside an outer circumference of the plunger guide portion 11. In other words, the fixing portion 12 and the plunger guide portion 11 are formed inside the coil portion 16 having a cylindrical shape in a fixed state, and the movable yoke 15 is movably installed in the axial direction (the axis O direction) of the coil portion 16.

The coil portion 16 moves the movable yoke 15 in the axis O direction, and includes a bobbin 16a and a coil 16b wound around the bobbin 16a.

The members (the plunger guide portion 11, the fixing portion 12, the movable yoke 15 and the coil portion 16) are basically formed rotationally symmetrically, i.e., in a circular cross-sectional shape. In addition, a housing 30 having a substantially cylindrical shape is formed integrally with an outer circumferential portion of the plunger guide portion 11, and the members are accommodated in the housing 30.

The movable yoke 15 is configured to advance to be separated from the fixing portion 12 due to excitation (an ON state) of the coil portion 16 from electrical conduction to the coil 16b, and retreat to approach the fixing portion 12 due to demagnetization (an OFF state) of the coil portion 16.

Further, in Fig. 1, a downward direction is an advance direction, and an upward direction is a retreating direction.

As shown in Fig. 2, the movable yoke 15 has a flange portion 15a formed on an upper end portion thereof, and a through-hole vertically passing through a central portion of the flange portion 15a. A bearing member 17 is installed in an accommodating portion 15b formed in the movable yoke 15 to be relatively movable with respect to the movable yoke 15 in the axial direction (the axis O direction).

The bearing member 17 is constituted by a columnar main body portion 17a, a columnar protruding portion 17b formed on an upper end surface of the main body portion 17a coaxially with the main body portion 17a and having a diameter smaller than that of the main body portion 17a, and a columnar attachment portion 17c formed on a lower end surface of the main body portion 17a coaxially with the main body portion 17a and having a diameter smaller than that of the protruding portion 17b.

The protruding portion 17b is inserted through a through-hole formed in the flange portion 15a, and an upper end portion thereof protrudes from a rear end portion of the movable yoke 15.

In addition, a bearing surface 18 is formed in the accommodating portion 15b. The bearing surface 18 is constituted by a lower surface of the flange portion 15a, and an upper end surface of the main body portion 17a of the bearing member 17 abuts the bearing surface 18. An outer circumferential surface of the main body portion 17a is in slidable contact with an inner wall surface of the accommodating portion 15b in the axial direction.

An upper end portion of a columnar plunger 20 is inserted and fixed into a lower end portion of the accommodating portion 15b of the movable yoke 15. The upper end portion of the plunger 20 is a head portion 20b having a diameter larger than that of a main body portion 20a, and the head portion 20b is press-fitted and fixed to a cylindrical inner wall surface of the accommodating portion 15b.

Accordingly, the plunger 20 is configured to move together with the movable yoke 15 in the axis O direction.

In addition, as shown in Fig. 1, a through-hole 11a is formed in the plunger guide portion 11 along the axis O direction, the main body portion 20a of the plunger 20 is movably inserted through the through-hole 11a via two bearings 21 and 21 in the axial direction, and the head portion 20b of a tip portion (an upper end portion) of the plunger 20 is press-fitted and fixed to the movable yoke 15 as described above.

The fixing portion 12 includes a cylindrical main body portion 12a having an upper end portion that is closed, and a disk-shaped flange portion 12b formed on an outer circumferential portion of the upper end portion of the main body portion 12a. An outer circumferential edge portion of the flange portion 12b is installed on a stepped portion 30a formed in the upper end portion of the housing 30, and the outer circumferential surface of the flange portion 12b comes in contact with the inner circumferential surface of the housing 30 and is fixed into the housing 30. In addition, the upper end surface of the fixing portion 12 protrudes slightly upward from the upper end portion of the housing 30. A lower surface of a closing plate portion 12c which constitutes the upper end surface of the fixing portion 12 is disposed slightly below the upper end portion of the housing 30, and the protruding portion 17b of the bearing member 17 is configured to collide with the lower surface. Further, the closing plate portion 12c is formed to be thicker than the main body portion 12a.

In addition, the movable yoke 15 has a shock absorbing means 31 configured to absorb a shock when the plunger 20 retreats together with the movable yoke 15 and the protruding portion 17b protruding from the movable yoke 15 collides with the lower surface of the closing plate portion 12c of the fixing portion 12.

The shock absorbing means 31 includes the bearing member 17, a spring (a biasing member) 32 and a cushioning material 33.

As described above, the bearing member 17 is installed in the accommodating portion 15b of the movable yoke 15 to be relatively movable to the movable yoke 15 in the axial direction, and the bearing member 17 includes the protruding portion 17b protruding from the rear end portion of the movable yoke 15 and the attachment portion 17c to which the cushioning material 33 is attached. The main body portion 17a, on which the protruding portion 17b and the attachment portion 17c are installed, is in slidable contact with the inner wall surface of the accommodating portion 15b in the axial direction.

The spring 32 is installed between the bearing member 17 and the plunger 20 in an elastically compressed state, and biases the main body portion 17a of the bearing member 17 to the bearing surface 18 formed in the accommodating portion 15b. Accordingly, the protruding portion 17b of the bearing member 17 protrudes from a rear end portion (an upper end portion) of the movable yoke 15 by a predetermined length, and upward movement of the bearing member 17 is restricted.

In addition, the spring 32 is set to a load higher than that of a return spring configured to bias the plunger 20 in a retreating direction, and restricts an initial position of the plunger 20. That is, a biasing force of the spring 32 is set to be larger than the biasing force of the return spring configured to bias the plunger 20 in the retreating direction, and thus the plunger 20 returns to be positioned at the predetermined position with high accuracy.

A small diameter portion is formed on a lower end portion of the main body portion 17a of the bearing member 17, and an upper end portion of the spring 32 is fitted onto the small diameter portion. In addition, a small diameter portion is formed on an upper end portion of the head portion 20b of the plunger 20, and a lower end portion of the spring 32 is fitted onto the small diameter portion. In addition, a predetermined gap is formed between the spring 32 and the inner wall surface of the accommodating portion 15b.

Then, when the movable yoke 15 retreats together with the plunger 20 and the protruding portion 17b of the bearing member 17 collides with the lower surface of the closing plate portion 12c of the fixing portion 12, the movable yoke 15 temporarily retreats against the biasing force of the spring 32. Thus, the shock is absorbed and collision noise when the protruding portion 17b collides with the lower surface of the closing plate portion 12c of the fixing portion 12 is reduced.

Then, while the movable yoke 15 that has retreated once advances together with the plunger 20 and returns to the predetermined position by the spring 32, since the advance of the movable yoke 15 is restricted by the bearing surface 18, the plunger 20 returns to be positioned and stopped at the predetermined position with high accuracy, and thus, a stroke amount of the plunger 20 can be constantly maintained always.

The cushioning material 33 is installed between the bearing member 17 and the plunger 20, and absorbs a shock when the protruding portion 17b of the bearing member 17 collides with the closing plate portion 12c of the fixing portion 12 and a shock when the head portion 20b of the plunger 20 collides with the bearing member 17. For example, the cushioning material 33 is formed of a columnar rubber and has an attachment concave portion formed at a central portion of an upper end surface thereof.

While the columnar cushioning material 33 is attached and fixed to the attachment portion 17c by fitting the attachment concave portion of the upper end surface into the attachment portion 17c of the bearing member 17 and the cushioning material 33 abuts the head portion 20b of the plunger 20, a slight gap is formed between the head portion 20b and the cushioning material 33.

In addition, a gap S is formed between the cushioning material 33 and the inner wall surface of the accommodating portion 15b in the moving direction of the movable yoke 15. Accordingly, the cushioning material 33 does not come in contact with the inner wall surface.

Further, the cushioning material 33 is disposed inside the spring 32 not to come in contact with the spring 32 and overlaps a portion of the spring 32 in a direction perpendicular to the axial direction.

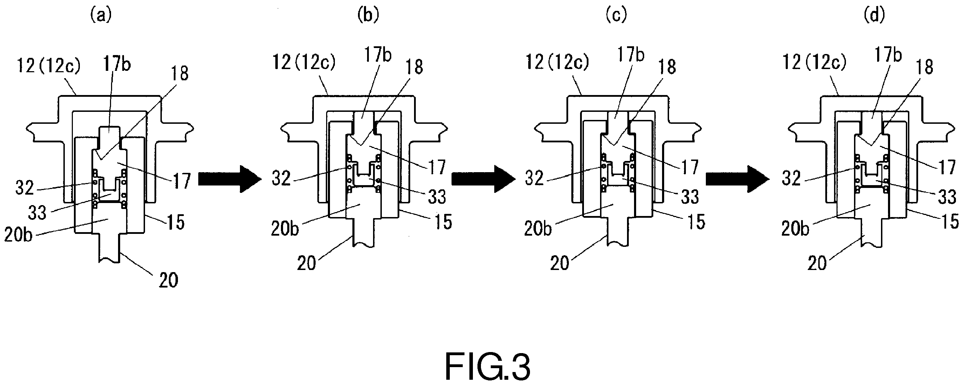

Next, an operation of the electromagnetic solenoid according to the embodiment will be described with reference to Fig. 3.

Fig. 3(a) shows a state in which the movable yoke 15 advances to be separated from the fixing portion 12 when the coil portion 16 (Fig. 1) is excited. In this state, the plunger 20 fixed to the movable yoke 15 advances together with the movable yoke 15 to be separated from the fixing portion 12. In addition, the bearing member 17 of the shock absorbing means 31 is biased by the spring 32 in the retreating direction (upward in Fig. 3) and abuts the bearing surface 18 to restrict further retraction, and the protruding portion 17b of the bearing member 17 protrudes from the rear end portion of the movable yoke 15.

Next, when the coil portion 16 is demagnetized, as shown in Fig. 3(b), the plunger 20 is pressed by an external load of a return spring or the like (not shown) to retreat to approach the fixing portion 12 together with the movable yoke 15, and the protruding portion 17b protruding from the rear end portion of the movable yoke 15 collides with the lower surface of the closing plate portion 12c of the fixing portion 12. Then, when the movable yoke 15 temporarily retreats against a biasing force of the spring 32, a shock is absorbed and collision noise is reduced.

Further, as shown in Fig. 3(c), while the plunger 20 has retreated, since the cushioning material 33 is attached to the attachment portion 17c of the bearing member 17, the plunger 20 collides with the cushioning material 33. Accordingly, the plunger 20 that has retreated does not collide with the bearing member 17, and collision noise is reduced by the cushioning material 33.

After that, as shown in Fig. 3(d), while the movable yoke 15 that has retreated once is pressed by a biasing force of the spring 32 in an advance direction and advances together with the plunger 20 to return to a predetermined position, since the advance of the movable yoke 15 is restricted by the bearing surface 18, the plunger 20 returns to and stops at the predetermined position.

In this way, according to the embodiment, when the coil portion 16 is demagnetized, the plunger 20 is pressed by the return spring (an external load) to retreat to approach the fixing portion 12 together with the movable yoke 15, and the protruding portion 17b protruding from the rear end portion of the movable yoke 15 collides with the closing plate portion 12c of the fixing portion 12, a shock is absorbed and collision noise is reduced as the movable yoke 15 temporarily retreats against a biasing force of the spring 32.

Further, since the cushioning material 33 is attached to the attachment portion 17c of the bearing member 17, the plunger 20 that has retreated does not collide with the bearing member 17 and collision noise is reduced by the cushioning material 33. Accordingly, collision noise generated due to collision of the plunger 20 can be reduced.

In addition, while the movable yoke 15 that has retreated once is pressed by a biasing force of the spring 32 in an advance direction and advances together with the plunger 20 to return to the predetermined position, since the advance of the movable yoke 15 is restricted by the bearing surface 18, the plunger 20 can return and be positioned to stop at the predetermined position with high accuracy, and thus, a stroke amount of the plunger 20 can be constantly maintained always.

In addition, since the shock absorbing means 31 is installed in the accommodating portion 15b inside of the movable yoke 15 to be relatively movable to the movable yoke 15 in the axial direction, and has the bearing member 17 having the protruding portion 17b protruding from the rear end portion of the movable yoke 15 and the spring 32 installed between the bearing member 17 and the plunger 20 and configured to bias the bearing member 17 against the bearing surface 18 formed in the accommodating portion 15b, the shock absorbing means 31 can be installed on the movable yoke 15 unlike the related art, and there is no need to be installed on the fixing portion 12. Accordingly, versatility becomes good, and miniaturization is achieved.

Further, since the bearing surface 18 configured to restrict movement of the bearing member 17 biased by the spring 32 is formed in the accommodating portion 15b of the movable yoke 15 and there is no need to fix the restriction portion as in the related art to the fixing portion 12 by caulking as a separate part, the number of parts or fixing tasks is not increased, which achieves reduction in cost.

In addition, since the cushioning material 33 is installed between the bearing member 17 and the plunger 20, the plunger 20 that has retreated together with the movable yoke 15 does not collide with the bearing member 17, and collision noise is reduced by the cushioning material 33. Accordingly, collision noise generated due to collision of the plunger 20 can be reduced.

Further, since the cushioning material 33 is attached to the attachment portion 17c of the bearing member 17, the cushioning material 33 can be easily incorporated by accommodating the bearing member 17 in the accommodating portion 15b of the movable yoke 15.

In addition, since the gap S is formed between the cushioning material 33 and the inner wall surface of the accommodating portion 15b, even when the movable yoke 15 moves together with the plunger 20, the cushioning material 33 does not interfere with the inner wall surface of the accommodating portion 15b. Accordingly, movement of the movable yoke 15 is smooth, and the cushioning material 33 is also not damaged due to friction between the inner wall surface and the cushioning material 33.

In addition, since the cushioning material 33 is disposed inside the spring 32 not to come in contact with the spring 32, the cushioning material 33 and the spring 32 do not interfere with each other. Accordingly, the spring 32 receives no influence from the cushioning material 33, and movement of the movable yoke 15 becomes smooth.

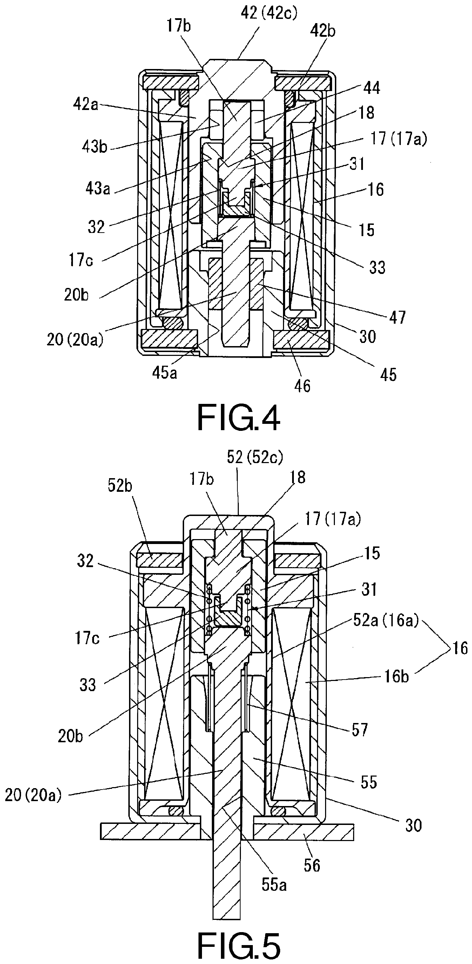

Fig. 4 and Fig. 5 are cross-sectional views showing another embodiment of the present invention.

Since main differences between the electromagnetic solenoid according to the other embodiment shown in the drawings and the electromagnetic solenoid according to the first embodiment are a shape of the fixing portion, a shape of the plunger guide portion, and so on, and configurations of the other components, in particular, the shock absorbing means, are the same as the first embodiment, the same components are designated by the same reference numerals and detailed description thereof will be omitted.

### (Second embodiment)

An electromagnetic solenoid of a second embodiment shown in Fig. 4 is a linear solenoid to which the present invention is applied, and in the electromagnetic solenoid, a fixing portion 42 has a length in an upward/downward direction larger than that of the fixing portion 12 of the first embodiment, and a flange portion 42b configured to be fixed to the housing 30 is formed separately from a main body portion 42a.

In addition, a cavity 43a having a large diameter and a cavity 43b having a small diameter are installed coaxially and adjacent to each other in the axial direction in the main body portion 42a. The movable yoke 15 is installed in the cavity 43a on a lower side to be movable in the axial direction, and a bearing 44 is installed in the cavity 43b on an upper side. The protruding portion 17b of the bearing member 17 protruding from the rear end portion of the movable yoke 15 is larger than the protruding portion 17b according to the first embodiment, and the protruding portion 17b is supported to be movable vertically by the bearing 44.

In addition, like the first embodiment, the shock absorbing means 31 is installed on the movable yoke 15 and includes the bearing member 17, the spring 32 and the cushioning material 33.

A plunger guide portion 45 has a vertical length smaller than that of the plunger guide portion 11 according to the first embodiment, and the plunger guide portion 45 is fixed to the housing 30 by a flange portion 46 separated therefrom. The main body portion 20a of the plunger 20 is movably inserted through a through-hole 45a of the plunger guide portion 45 via one bearing 47 in the axial direction.

In the electromagnetic solenoid of the embodiment, when the coil portion 16 is excited, the movable yoke 15 advances (advances downward in Fig. 4) together with the plunger 20, and further, when the coil portion 16 is demagnetized in this state, the plunger 20 is pressed by a biasing force of the return spring (not shown) and retreats (retreats upward in Fig. 4) to approach a fixing portion 52 together with the movable yoke 15.

When the movable yoke 15 retreats and the protruding portion 17b protruding from the rear end portion of the movable yoke 15 collides with a lower surface of a closing plate portion 42c of the fixing portion 42, a shock is absorbed and collision noise is reduced as the movable yoke 15 temporarily retreats against a biasing force of the spring 32.

Further, when the plunger 20 retreats, since the plunger 20 collides with the cushioning material 33, the plunger 20 that has retreated does not collide with the bearing member 17, and collision noise is reduced by the cushioning material 33.

In addition, while the movable yoke 15 that has retreated once is pressed by a biasing force of the spring 32 in an advance direction and advances together with the plunger 20 to return to the predetermined position, since the advance of the movable yoke 15 is restricted by the bearing surface 18, the plunger 20 can return and be positioned to stop at the predetermined position with high accuracy, and thus, a stroke amount of the plunger 20 can be constantly maintained always.

Like the first embodiment, the electromagnetic solenoid of the second embodiment has good versatility, resonance or the like is reduced while achieving miniaturization, and further, the number of parts, fixing tasks, or the like, can be reduced.

In addition, it can be recognized that versatility is increased by employing the shock absorbing means 31 since the configuration of the shock absorbing means 31 is the same as in the first embodiment,.

### (Third embodiment)

An electromagnetic solenoid of a third embodiment shown in Fig. 5 is an ON/OFF solenoid to which the present invention is applied, and in the electromagnetic solenoid, the fixing portion 52 has a length in an upward/downward direction larger than that of the fixing portion 12 of the first embodiment and the fixing portion 42 of the second embodiment, and a flange portion 52b configured to be fixed to the housing 30 is formed separately from a main body portion 52a.

In addition, the main body portion 52a of the fixing portion 52 also functions as the bobbin 16a on which the coil 16b is wound, and the main body portion 52a extends to the vicinity of the bottom portion of the housing 30.

In addition, like the first embodiment, the shock absorbing means 31 is installed on the movable yoke 15 and includes the bearing member 17, the spring 32 and the cushioning material 33.

A plunger guide portion 55 is supported by a flange portion 56 separated therefrom, and fixed to the bottom portion of the housing 30.

An upper end portion of a through-hole 55a of the plunger guide portion 55 has a diameter larger than that of the lower end portion, and the main body portion 20a of the plunger 20 is movably inserted through a lower end portion of the through-hole 55a in the axial direction.

A spring 57 is inserted into an upper end portion of the through-hole 55a in a state in which the spring 57 is compressed on outside the plunger 20. A lower end portion of the spring 57 abuts a bottom portion of the upper end portion of the through-hole 55a, and an upper end portion of the spring 57 abuts the head portion 20b of the plunger 20. Accordingly, the spring 57 biases the plunger 20 in a retreating direction (upward).

Accordingly, in the electromagnetic solenoid of the embodiment, when the coil portion 16 is excited, the movable yoke 15 advances (advances downward in Fig. 5) against a biasing force of the spring 57 together with the plunger 20, and further, when the coil portion 16 is demagnetized in this state, the plunger 20 is pressed by a biasing force of the spring 57 and retreats (retreats upward in Fig. 5) to approach the fixing portion 52 together with the movable yoke 15.

When the movable yoke 15 retreats and the protruding portion 17b protruding from the rear end portion of the movable yoke 15 collides with a lower surface of a closing plate portion 52c of the fixing portion 52, the movable yoke 15 temporarily retreats against a biasing force of the spring 32 and thus a shock is absorbed and collision noise is reduced.

Further, when the plunger 20 retreats, since the plunger 20 collides with the cushioning material 33, the plunger 20 that has retreated does not collide with the bearing member 17, and collision noise is reduced by the cushioning material 33.

In addition, while the movable yoke 15 that has retreated once is pressed by a biasing force of the spring 32 in an advance direction and advances together with the plunger 20 to return to the predetermined position, since the advance of the movable yoke 15 is restricted by the bearing surface 18, the plunger 20 can return and be positioned to stop at the predetermined position with high accuracy, and thus, a stroke amount of the plunger 20 can be constantly maintained always.

Like the first and second embodiments, the electromagnetic solenoid of the third embodiment has good versatility, resonance or the like can be reduced while achieving miniaturization, and further, the number of parts, fixing tasks, or the like, can be reduced.

In addition, it can be recognized that versatility is increased by employing the shock absorbing means 31 since the configuration of the shock absorbing means 31 is the same as the first and second embodiments.

### [Reference Signs List]

- 12, 42, 52: fixing portion
- 15: movable yoke
- 15a: accommodating portion
- 16: coil portion
- 17: bearing member
- 17b: protruding portion
- 18: bearing surface
- 20: plunger
- 31: shock absorbing means
- 32: spring (biasing member)
- 33: cushioning material S gap

## Claims

1. An electromagnetic solenoid, comprising:
a cylindrical coil portion (16);
a fixing portion (12, 42, 52) fixed inside the coil portion (16);
a plunger (20) extending in an axial direction of the coil portion (16); and
a movable yoke (15) to which the plunger (20) is fixed, wherein the movable yoke (15) is movably installed inside the coil portion (16) in the axial direction of the coil portion (16), configured for advancing to be separated from the fixing portion (12, 42, 52) together with the plunger (20) due to excitation of the coil portion (16), and configured for retreating to approach the fixing portion together (12, 42, 52) with the plunger (20) due to demagnetization of the coil portion (16),
wherein the movable yoke (15) has a shock absorbing means (31) for absorbing a shock when the plunger (20) retreats together with the movable yoke (15) and the movable yoke (15) collides with the fixing portion (12, 42, 52),
wherein the shock absorbing means (31) has:
a bearing member (17) installed in an accommodating portion (15b) formed in the movable yoke (15) for relatively moving with respect to the movable yoke (15) in the axial direction and having a protruding portion (17b) protruding from an end portion of the movable yoke (15); and
a spring (32) installed between the bearing member (17) and the plunger (20) for biasing the bearing member (17) to a surface (18) formed in the accommodating portion (15b), and
when the plunger (20) retreats together with the movable yoke (15) and the protruding portion (17b) collides with the fixing portion (12, 42, 52), the movable yoke (15) temporarily retreats against a biasing force of the spring (32) to return to a predetermined position;
**characterized in that** a cushioning material (33) is installed between the bearing member (17) and the plunger (20), wherein the cushioning material (33) is configured for absorbing a shock between the bearing member (17) and the plunger (20) which is moved together with the movable yoke (15) when the movable yoke (15) retreats against the biasing force of the spring (32), and wherein the cushioning material (33) is attached to an attachment portion (17c) of the bearing member (17) and movable with the bearing member (17) with respect to the movable yoke (15) in the axial direction.

2. The electromagnetic solenoid according to claim 1, wherein a gap is formed between the cushioning material (33) and an inner wall surface of the accommodating portion (15a) in a moving direction of the movable yoke (15).

3. The electromagnetic solenoid according to claim 1 or 2, wherein the cushioning material (33) is disposed inside the spring (32) and is not coming in contact with the spring (32).

## Patentansprüche

1. Elektromagnetisches Solenoid, umfassend:
einen zylindrischen Spulenabschnitt (16);
einen Befestigungsabschnitt (12, 42, 52), der innerhalb des Spulenabschnitts (16) befestigt ist,
einen Kolben (20), der sich in einer axialen Richtung des Spulenabschnitts (16) erstreckt; und
ein bewegliches Joch (15), an das der Kolben (20) befestigt ist, wobei das bewegliche Joch (15) beweglich innerhalb des Spulenabschnitts (16) in der axialen Richtung des Spulenabschnitts (16) installiert ist, konfiguriert zum vorwärts bewegen, um von dem Befestigungsabschnitt (12, 42, 52) zusammen mit dem Kolben (20) aufgrund der Erregung des Spulenabschnitts (16) getrennt zu werden, und konfiguriert zum Zurückziehen, um sich dem Befestigungsabschnitt (12, 42, 52) zusammen mit dem Kolben (20) aufgrund der Entmagnetisierung des Spulenabschnitts (16) zu nähern,
wobei das bewegliche Joch (15) ein stoßabsorbierendes Mittel (31) zum Absorbieren eines Stoßes aufweist, wenn sich der Kolben (20) zusammen mit dem beweglichen Joch (15) zurückzieht und das bewegliche Joch (15) mit dem Befestigungsabschnitt (12, 42, 52) kollidiert,
wobei das stoßabsorbierendes Mittel (31) aufweist
ein Lagerelement (17), installiert in einem Aufnahmeabschnitt (15b), ausgebildet in dem beweglichen Joch (15), um sich in Bezug auf das bewegliche Joch (15) in der axialen Richtung relativ zu bewegen, und aufweisend einen vorstehenden Abschnitt (17b), der von einem Endabschnitt des beweglichen Jochs (15) vorsteht; und
eine Feder (32), die zwischen dem Lagerelement (17) und dem Kolben (20) installiert ist, um das Lagerelement (17) vorzuspannen zu einer Fläche (18), gebildet in dem Aufnahmeabschnitt (15b) und wenn sich der Kolben (20) zusammen mit dem beweglichen Joch (15) zurückzieht und der vorstehende Abschnitt (17b) mit dem Befestigungsabschnitt (12, 42, 52) kollidiert, sich das bewegliche Joch (15) vorübergehend gegen eine Vorspannkraft der Feder (32) zurückzieht, um in eine vorbestimmte Position zurückzukehren
**dadurch gekennzeichnet, dass** ein Dämpfungsmaterial (33) zwischen dem Lagerelement (17) und dem Kolben (20) installiert ist, wobei das Dämpfungsmaterial (33) konfiguriert ist, dass es einen Stoß zwischen dem Lagerelement (17) und dem Kolben (20) absorbiert, der zusammen mit dem beweglichen Joch (15), wenn das bewegliche Joch (15) sich zurückzieht gegen die Vorspannkraft der Feder (32) bewegt wird, und wobei das Dämpfungsmaterial (33) an einem Befestigungsabschnitt (17c) des Lagerelements (17) angebracht und mit dem Lagerelement (17) in Bezug auf das bewegliche Joch (15) in der axialen Richtung bewegbar ist.

2. Elektromagnetisches Solenoid gemäß Anspruch 1, wobei ein Spalt zwischen dem Dämpfungsmaterial (33) und einer Innenwandfläche des Aufnahmeabschnitts (15a) in einer Bewegungsrichtung des beweglichen Jochs (15) gebildet ist.

3. Elektromagnetisches Solenoid gemäß Anspruch 1 oder 2, wobei das Dämpfungsmaterial (33) innerhalb der Feder (32) angeordnet ist und nicht mit der Feder (32) in Kontakt kommt.

## Revendications

1. Solénoïde électromagnétique, comprenant:
une partie de bobine cylindrique (16);
une partie de fixation (12, 42, 52) fixée à l'intérieur de la partie de bobine (16);
un plongeur (20) s'étendant dans une direction axiale de la partie de bobine (16); et
une culasse mobile (15) à laquelle le plongeur (20) est fixé, dans laquelle la culasse mobile (15) est installée de manière mobile à l'intérieur de la partie de bobine (16) dans la direction axiale de la partie de bobine (16), configurée pour avancer afin d'être séparée de la partie de fixation (12, 42, 52) conjointement au plongeur (20) en raison de l'excitation de la partie de bobine (16), et configurée pour se retirer afin de se rapprocher de la partie de fixation (12, 42, 52) conjointement au plongeur (20) en raison de la démagnétisation de la partie de bobine (16),
dans laquelle la culasse mobile (15) a un moyen amortisseur (31) pour absorber un choc lorsque le piston (20) se retire avec la culasse mobile (15) et la culasse mobile (15) entre en collision avec la partie de fixation (12, 42, 52),
dans lequel le moyen amortisseur (31) a:
un élément de palier (17) installé dans une partie de logement (15b) formée dans la culasse mobile (15) pour se déplacer relativement par rapport à la culasse mobile (15) dans la direction axiale et ayant une partie en saillie (17b) faisant saillie à partir de la partie d'extrémité de la culasse mobile (15); et
un ressort (32) installé entre l'élément de palier (17) et le plongeur (20) pour solliciter l'élément de palier (17) vers une surface (18) formée dans la partie de logement (15b), et lorsque le piston (20) se retire en même temps que la culasse mobile (15) et la partie saillante (17b) entre en collision avec la partie de fixation (12, 42, 52), la culasse mobile (15) se retire temporairement contre une force de sollicitation du ressort (32) pour revenir à une position prédéterminée;
**caractérisé en ce qu'**un matériau d'amortissement (33) est installé entre l'élément de palier (17) et le plongeur (20), dans lequel le matériau d'amortissement (33) est configuré pour absorber un choc entre l'élément de palier (17) et le plongeur (20) qui est déplacé conjointement à la culasse mobile (15) lorsque la culasse mobile (15) se retire contre la force de sollicitation du ressort (32), et
dans lequel le matériau d'amortissement (33) est fixé à une partie de fixation (17c) de l'élément de palier (17) et mobile avec l'élément de palier (17) par rapport à la culasse mobile (15) dans la direction axiale.

2. Solénoïde électromagnétique selon la revendication 1, dans laquelle un espace est formé entre le matériau d'amortissement (33) et une surface de paroi intérieure de la partie de logement (15a) dans une direction de déplacement de la culasse mobile (15).

3. Solénoïde électromagnétique selon la revendication 1 ou 2, dans laquelle le matériau d'amortissement (33) est disposée à l'intérieur du ressort (32) et ne vient pas en contact avec le ressort (32).
